(19) Europäisches Patentamt
European Patent Office
Office européen des brevets

(11) **EP 3 582 142 A1**

(12) **EUROPEAN PATENT APPLICATION**

(43) Date of publication:
**18.12.2019 Bulletin 2019/51**

(51) Int Cl.:
**G06K 9/46** *(2006.01)*    **G06K 9/62** *(2006.01)*

(21) Application number: **18178146.9**

(22) Date of filing: **15.06.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Université de Liège**
**4000 Liège (BE)**

(72) Inventors:
• **VAN DROOGENBROECK, Marc**
**3090 Overijse (BE)**
• **DELIEGE, Adrien**
**4650 Herve (BE)**
• **CIOPPA, Anthony**
**4680 Oupeye (BE)**

(74) Representative: **DenK iP**
**Hundelgemsesteenweg 1116**
**9820 Merelbeke (BE)**

(54) **IMAGE CLASSIFICATION USING NEURAL NETWORKS**

(57)    A computer-implemented method for training a neural network for classifying image data and a related computer program product are disclosed. A labelled input data set comprising a plurality of labelled image data samples is provided together with a neural network. The neural network comprises an input layer, at least one intermediate layer, and an output layer having one channel per label class. Each channel provides a mapping of labelled image data samples onto feature vectors. Furthermore, the input layer of a decoder network for reconstructing image data samples at its output is connecting the output layer of the neural network. A classifier predicts class labels as the labels of those channels for which a normed distance of its feature vector relative to a pre-determined reference point is smallest. A loss function for the neural network is suitable for steering, for each channel, the feature vectors onto which image data samples of the associated class are mapped, into a convex target region around the pre-determined reference point.

**FIG. 1**

**Description**

**Field of the invention**

The present invention relates to the field of image classification devices and methods. More particularly it relates to image classification devices and methods using neural networks.

**Background of the invention**

Convolutional neural networks are amongst state-of-the-art image classifying computer implemented methods. Receiving an image at its input, a convolutional neural network is trained to predict a correct output label for a class representing the received image. It is possible to obtain classification of hundreds or thousands of different objects. Yet successful training state-of-the-art convolutional neural networks is often presented as a tedious task requiring long training times, important computational resources, and very large data sets. This is partly due to the enormous amount of adjustable network parameters the values of which require careful optimization; this is particularly true for deep networks with many hidden layers stacked between its input and output layer. Hence there is room for improved neural network architectures, in particular architectures with less adjustable network parameters that still yield excellent classification performances.

**Summary of the invention**

It is an object of embodiments of the present invention to provide accurate and easy-to-train neural networks for classifying images.

The above objective is accomplished by a method and computer program code according to the present invention.

In a first aspect the present invention relates to a computer-implemented method for training a neural network for classifying image data. A labelled input data set comprising a plurality of labelled image data samples is provided, wherein labels correspond to a set of image data classes. A neural network comprising an input layer, at least one intermediate layer, and an output layer comprising one channel per class is also provided. For each channel each of the plurality of labelled image data samples, applied at the input layer of the neural network, is mapped onto a multidimensional feature vector. Furthermore, a layered decoder network for reconstructing image data samples at its output is provided. The output layer of the neural network is connected to an input layer of the decoder network. A classifier for predicting class labels is also provided. Predicted class labels are selected as the labels of those classes for which a normed distance of the feature vector of the associated channel is smallest relative to a pre-determined reference point. A loss function for the neural network and a loss function for the decoder network are provided and combined into a cost function. The loss function for the decoder network is suitable for reducing a deviation between reconstructed image data samples and corresponding image data samples applied at the input layer of the neural network. The loss function for the neural network is suitable for steering, for each channel, the feature vectors corresponding to image data samples of the class associated with this channel, into a convex target region around the pre-determined reference point, whereas the feature vectors corresponding to image data samples of at least one of the other classes not associated with this channel, are steered away from the convex target region. Network parameters of the neural network and the decoder network are trained with a training algorithm using the cost function and at least a subset of the labelled input data set as inputs.

In particular embodiments of the present invention, a neural network may be provided as a convolutional neural network. The provided convolutional neural network preferable comprises at least two intermediate convolutional layers. Furthermore, the output layer of the neural network may comprise sigmoid-activated neurons.

According to particular embodiments of the present invention, providing a neural network may further comprise providing a neural network with a batch normalization layer. The batch normalization layer may be inserted in between the output layer and a last one of the at least one intermediate layer.

According to some embodiments of the present invention, the loss function of the neural network may be implemented as a piecewise linear loss. A piecewise linear loss may include a loss-free margin.

According to some embodiments of the present invention, the loss function of the decoder network is implemented as a mean-square loss between reconstructed and applied image data samples.

According to some embodiments of the present invention, synthesizing at least one new labelled image data sample by selecting a point in the convex target region of the feature space associated with any of the classes and applying the selected point to the input layer of the decoder network for reconstructing, at its output, the synthesized new labelled image data sample may be included as a further step.

A first selected point may correspond to a perturbed value and a second selected point may correspond to an unperturbed value of the feature vector of a channel onto which an existing image data sample, addressing said channel, is mapped. The first and second selected point may generate a first and a second reconstructed labelled image data sample. The additional step of synthesizing at least one new labelled image data sample may further comprise combining a deviation between first and a second reconstructed labelled image data sample with the existing image data sample.

Additionally, the steps of any of the previously described methods may be repeated taking into account the fact that a plurality of synthesized new labelled image data samples are added to or substituting the labelled input data set. Repetition of the steps of any of the previously described methods may be performed re-using the previously provided neural network. Alternatively, a new neural network may be provided, which is different from the previously provided one.

According to some embodiments of the present invention, a further step may be included and comprises momentarily modifying the label of each labelled image data sample such that at least one channel, corresponding to any of the other classes not addressed by the label, is not contributing to the loss function of the neural network. The at least one channel not contributing to the loss function of the neural network may be selected as the channel for which a normed distance of its feature vector relative to the pre-determined reference point is smallest.

For some embodiments of the present invention, at least one alternative class label, different from the predicted class label, may be provided in a further step. The at least one alternative class label may be assigned to the at least one label with which the selected at least one channel not contributing to the loss function of the neural network is associated. In yet a further step, a relation between the feature vectors of the at least one alternative class label and the predicted class label may be detected. A detected relation between the feature vectors of the at least one alternative class label and the predicted class label may include verifying whether the feature vectors of the at least one alternative class label and the predicted class label are all located inside the convex target region.

In further embodiments of the present invention, a result of the detected relation may be used to decide when one or more image data samples are removed or relabelled. This further step may result in a clean labelled input data set. The steps of any of the previous methods may then be repeated with the clean labelled input data set as substitution for the labelled input data set.

In a second aspect the present invention relates to a computer-implemented method for classifying image data. The method comprises the steps of providing a neural network trained in accordance with any of the methods of the first aspect and applying unlabelled image data samples at the input layer of the trained neural network so as to obtain a predicted class label from the classifier.

In a third aspect the present invention relates to a computer program product comprising instructions which, when the program is executed by a computer, perform the steps of any of the methods of the first and/or second aspect.

In a fourth aspect the present invention relates to a computer-readable data carrier comprising instructions which, when executed on a computer, cause the computer to perform the steps of any of the methods of the first and/or second aspect.

In yet another aspect the present invention relates to a data processing device comprising means for carrying out the steps of a methods of the first and/or second aspect.

It is an advantage of embodiments of the present invention that a loss function for the neural network steers mapped feature vectors of true class image data samples into a convex target region. Selecting point in this convex target region, e.g. via interpolation between already mapped feature vectors of true class image data samples, for the purpose of data generation guarantees newly generated image data samples after reconstruction, which clearly correspond to the same true class.

It is an advantage of embodiments of the present invention that a reference point is pre-determined and does not have to be learnt and updated. This allows for faster learning of neural networks and requires less memory capacity. It also enables the interpretation and visualisation of prototyping vectors and prototypes. This is of advantage since a learning process of a neural network may be further inspected through visualization of its learnt prototypes. Additionally, a pre-determined reference point allows for fast data generation of new image data samples which does not necessarily rely on the perturbation of feature vector mappings of input image data, which reduces a time for generation of new image data samples.

It is an advantage of embodiments of the present invention that a plurality of output channels is provided, each having its own reference point in its own feature space. This allows more flexibility, for example the possibility to predict multiple classes.

It is an advantage of embodiments of the present invention that a neural network may be of a convolutional type such that network weights are re-used and shared over all the input space, e.g. pixels, of an image data sample. This greatly reduces the number of stored weights and memory access latencies, which also speeds up the training phase. Moreover, convolutional neural networks benefit from an intrinsic translation and/or rotation, and/or scale invariance.

It is an advantage of embodiments of the present invention that a loss function of the neural network may be given as the sum of channel-dependent losses, which enables fast parallel computation of those channel-dependent losses and of the network parameter updates related thereto.

It is an advantage of embodiments of the present invention that at least one channel, corresponding to any of the other classes not addressed by the image data sample label, is not contributing to the loss function of the neural network. This may be used to assign an alternative label to such a loss-free other channel, as sometimes image classes may overlap and/or allow for more than just a single label.

It is an advantage of embodiments of the present invention that new image data samples may be generated, also on-the-fly, which may be used to enlarge a scarce input data set. This is desirable in applications for which the collection and selection of image data samples is a complex and expensive process, e.g. in the medical imaging field. The synthetically enlarged input data set may be used as input data set to different or the same neural network, generally leading to an improved test error rate.

It is an advantage of embodiments of the present invention that a detected relation between an alternative label and a predicted and/or provided image data sample label may be used to clean up an input data set. The cleaned input data set may comprise less image data samples with inconsistent labels, e.g. by identifying and/or removing and/or re-labelling mislabelled image data samples or image data samples with noisy or insufficient labels. This also allows to judge the perceived consistency or quality of a labelled input data set. A cleaned input data set may be advantageously used to re-train a neural network or to train a new neural network for which lower test error rates may be expected.

It is an advantage of embodiments of the present invention that a multi-task learning approach is implemented which provides additional robustness to the neural network and acts as a regularizing means.

It is an advantage of embodiments of the present invention that a neural network trained in accordance with embodiments of the present invention may be used in combined classification-regression tasks, classification-segmentation tasks, and the like.

It is an advantage of embodiments of the present invention that a neural network trained in accordance with embodiments of the present invention may be used to identify handwritten digits, letters, and the like with high accuracies. This is of advantage in machine vision applications in which a camera image of a scene or object, e.g. of a document or ZIP-code, is classified by an embodiment of the present invention. An action may be performed based on the outcome of the classification, e.g. a sorting mechanism is actuated so as to sort the objects.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

**Brief description of the drawings**

The invention will now be described further, by way of example, with reference to the accompanying drawings, in which:

FIG. 1 is a flowchart explaining the steps of a method for training a neural network for classifying images in accordance with embodiments of the present invention.
FIG. 2 shows slices through the feature space to explain the contributions to the loss function for the neural network.
FIG. 3 depicts the functional relationship between a normed distance of a feature vector relative to a reference point and the contributions to the loss function for the neural network.
FIG. 4 shows a diagram for test error curves of different neural network architectures as a function of training epochs.
FIG. 5A to 5D show a two dimensional distribution for samples of handwritten letter images when applied to the input of a neural network trained on a handwritten digit image data set.
FIG. 6 depicts prototypes of a handwritten image digit class "four" and invariant transformations thereof.

The drawings are only schematic and are non-limiting. In the drawings, the size of some of the elements may be exaggerated and not drawn on scale for illustrative purposes. The dimensions and the relative dimensions do not necessarily correspond to actual reductions to practice of the invention.

Any reference signs in the claims shall not be construed as limiting the scope.

In the different drawings, the same reference signs refer to the same or analogous elements.

**EP 3 582 142 A1**

**Detailed description of illustrative embodiments**

The present invention will be described with respect to particular embodiments and with reference to certain drawings but the invention is not limited thereto but only by the claims.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, directional terminology such as top, bottom, front, back, leading, trailing, under, over and the like in the description and the claims is used for descriptive purposes with reference to the orientation of the drawings being described, and not necessarily for describing relative positions. Because components of embodiments of the present invention can be positioned in a number of different orientations, the directional terminology is used for purposes of illustration only, and is in no way intended to be limiting, unless otherwise indicated. It is, hence, to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art.

It should be noted that the use of particular terminology when describing certain features or aspects of the invention should not be taken to imply that the terminology is being re-defined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

DEFINITIONS

A neural network may be a convolutional neural network (CNN) which includes one or more convolutional layers, typically a stack of convolutional layers. It may also be an artificial neural network (ANN) which does not include any convolutional layer but which comprises one or more intermediate "hidden" layers, e.g. fully connected (FC) layers. Other layer types may also be comprised in the neural network, non-limiting examples of which are batch normalization layers (BN), pooling layers, down-sampling layers, etc. Furthermore, it is possible for the neural network to have branches which form subnetworks of the larger neural network. Subnetworks, individual intermediate layers, and/or output layers may be trained to perform different tasks, as set out in a multi-learning approach for instance. A neural network may be a deep neural network comprising a significant number of intermediate layers, e.g. more than five intermediate layers (e.g. ten or more intermediate layers), or may be a shallow neural network comprising only a few intermediate layers, e.g. less than five intermediate layers.

5

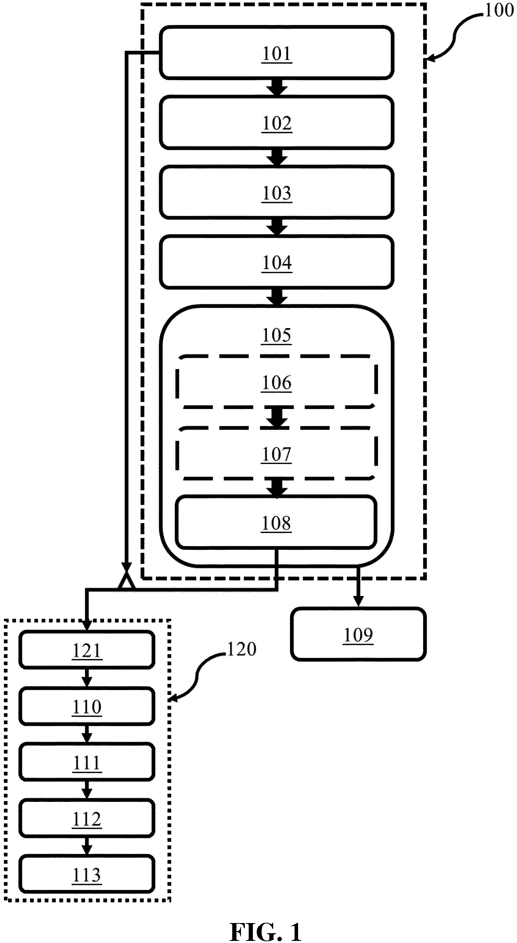

Referring to FIG. 1, a flowchart representing a CNN 100 in accordance with an embodiment of the present invention is shown. The flowchart is describing the flow of a transformed image data sample as it passes from one layer to the next layer of the CNN 100. A labelled image data sample 101 is applied at the input layer of the CNN 100. The labelled image data sample 101 is typically a two dimensional image randomly drawn from a large input data set of images and tagged by a label for indicating the class of images it belongs to. A first intermediate convolutional layer 102 yields a transformed image data sample by performing a convolution of the image data sample 101 with a filter. For a two dimensional image data sample 101, the filter used for convolution is typically of the same dimension, i.e. two dimensional, and may be applied row-wise. The size of the filter, e.g. a 9x9 (pixels) filter, defines the receptive field of the first convolutional layer 102, e.g. low-level features (e.g. edges) are only detected within a region of the image data sample which overlaps with the receptive field. During convolution, the filter may be moved relative to the image data sample 101 in steps larger than one (pixel/image unit). This is commonly referred to as the stride at which the convolution is performed and defines the output size of the filtered image data sample 101. The stride for the first convolutional layer 102 is equal to one, meaning that every translation (e.g. horizontal or vertical) of the filter by one image unit (pixel) relative to the image data sample addresses a different neuron of the first intermediate convolutional layer 102. The filter weights, however, are shared between all of the so addressed neurons. It is known in the field that sets or groups of independent filters may be used for convolution with the image data sample 101, which results in a plurality of output maps/output channels for the first convolutional layer 102 of the CNN 100, e.g. a filter group comprising 256 independent filters is selected for the first convolutional layer 102 which results in 256 output channels (256 transformed images originating from a single image data sample 101). To each filter of the filter group corresponds an output channel comprising neurons addressed by this filter. Therefore, only neurons belonging to the same output channel share the same filter weights. The neurons of the first convolutional layer 102 (of all output channels) may be rectified linear units (ReLU). Other non-limiting examples of neuron activation/transfer functions are hyperbolic tangent, sigmoid, squashing, etc.

In the above example, the image data sample 101 is given as a single channel two dimensional image (e.g. a single colour channel/monochrome image) on which the first convolutional layer 102 of the CNN 100 operates. Embodiments of the present invention are not restricted to single channels and also apply to image data samples 101 comprising more than one channel, e.g. three colour channels in an RGB colour image. In consequence, the first convolutional layer 102 yields a first transformation of the image data sample 101 by combining the convolutions of each channel of the image data sample 101 with its associated filter, e.g. there are three filters, three colour channels, and each filter is used for convolution with a separate colour channel. For convenience, the different filters, e.g. the three filters, may be stacked together along a new dimension so as to form a single higher dimensional filter (stack). Extending the described example to include a plurality of input channels and/or a plurality of output channels at any layer of the neural network therefore constitutes an immediate generalization of above described embodiment, as it would be recognized by a person skilled in the art.

A second intermediate convolutional layer 103, comprising neurons organized in output channels (e.g. also 256 output channels), is connected to the neurons of the first intermediate convolutional layer 102, thus leading to a subsequent transformation of the image data sample 101 presented at the input layer. The second intermediate layer 103 being a convolutional layer, the filter weights are again shared among all the neurons belonging to the same output channel of the second intermediate convolutional layer 103. In contrast to the first intermediate convolutional layer 102, the group of filters comprises a plurality of higher dimensional filter (stacks), e.g. 256 filter stacks (one filter stack per output channel). Each filter (stack), in turn, may be defined by its 2D size and a depth, the depth value depending on the number of input channels of the preceding layer. For example, the group of 256 filters used to perform the convolution operation of the second intermediate convolutional layer 103 may each comprise a filter stack of size 9x9*256. For the present embodiment, the neurons of the second intermediate convolutional layer 103 may also be ReLU-activated and a convolution stride of the second intermediate layer 103 may be set to two, which achieves a down-sampling action and more compact representation for the transformed image data samples 101.

In a next step, flattening step 104, the output channels of the second intermediate convolutional layer 103 are flattened. This amounts to a reorganization of data, given as a higher dimensional record (e.g. table, array), into a one dimensional form, e.g. a one dimensional tuple or vector, or, expressed in other words, the flattening step 104 removes the structured presentation of data as rows and columns of an image with a depth channel corresponding to a particular filter action. The data itself is not changed during the flattening step 104. Therefore, the flattening step 104 is not forming a layer of the CNN 100 in the sense that sums of weighted inputs are transformed.

The flattened outputs of the neurons of the second intermediate convolutional layer 103 are fully connected (FC) to a third intermediate dense (FC) layer 105. That is each flattened output neuron of the second intermediate convolutional layer 103 is connected, through weights, to all of the neurons (e.g. 160 neurons) of the third intermediate dense (FC) layer 105. A sigmoid activation function is applied to all the neurons of the third intermediate dense (FC) layer 105 in an activation step 108.

In a reshaping step 106, not affecting the data present at the inputs or outputs of the neurons of the third intermediate dense (FC) layer 105, the neurons of the third intermediate dense (FC) layer 105 may reorganized in a matrix structure, e.g. the flattened data representation obtained during the flattening step 104 may be converted into a two dimensional data structure (e.g. matrix). Therefore, also reshaping step 106 is concerned with a representation of data rather than with a modification of data, which is not equal to a neural network layer in the sense that sums of weighted inputs are transformed. Moreover, for some embodiments of the present invention, it is possible to interchange the order of the reshaping step 106 and the activation step 108. A matrix organization of the data present at the outputs of the neurons of the third intermediate dense (FC) layer 105 has the advantage that output channels (e.g. ten output channels, one output channel per image class present in the input data set) of the CNN 100 are conveniently identified as row vectors, e.g. ten output channels corresponding to ten image classes and each output channel is a 16 dimensional row vector. However, a particular matrix shape is optional and not limiting. Any mapping of the index used to enumerate and identify a particular neuron of the third intermediate dense (FC) layer 105 to an output channel index suffices to establish one output channel per image class for the CNN 100.

A batch normalization (BN) layer 107 may be inserted after weighted summing action of the third intermediate dense (FC) layer 105 and prior to the (nonlinear) activation step 108 thereof, such that the activation of each neuron of the third intermediate dense (FC) layer 105 is normalized with respect to a subset of the training data (e.g. normalized over mini-batches of the training data). The BN layer 107 may learn to steer the activations of each neuron of the third intermediate dense (FC) layer 105 to a linear region of its sigmoid transfer characteristic, but is also flexible enough to simply 'learn' an identity map. This may provide a useful remedy to the problem of vanishing gradients, if present in the neural network, may speed up the training of the neural network, and may also contribute to a regularization of the neural network. Vanishing gradients are typically a problem in deep neural networks comprising many intermediate layers.

Furthermore, a classifier 109 is provided which uses the feature vectors provided by the activated outputs 108 of the third intermediate dense (FC) layer 105, which is also the output layer of the CNN 100, as inputs for class prediction. It is an advantage of embodiments of the present invention that the feature vectors are learnable, non-trivial, nonlinear mappings of the image data sample 101 into a feature space as provided by an intermediate or output layer of a multi-layer neural network. The components of each feature vectors, in the context of the present invention, are given as the activated outputs of those neurons of the output layer of the neural network an index of which is mapped to the output channel associated with this feature vector, e.g. the activated outputs 108 of those neurons of the third intermediate dense (FC) layer 105 of the CNN 100 which are arranged in the same matrix row (vector) after the reshaping step 106 for the present embodiment. Hence, there is one output channel provided per image or label class and for each output channel a corresponding feature vector is defined. The classifier 109 provides at its output a predicted class label for a given image data sample 101 presented to the neural network at its input layer. While training the neural network, comparing the predicted class label with the true class label of the labelled image data sample 101 provides a suitable feedback, e.g. learning signal, to the tuneable parameters of the neural network.

The classifier 109 determines a predicted class label, c, out of C given classes as the class associated with the feature vector, f, whose normed distance with respect to a (pre-determined) reference point is smallest. Therefore, the classifier 109 may first determine the L2-distance of each feature vector, $f_j$, with respect to a reference point $P_j$, and select in a second step the feature vector having the smallest distance value, e.g. $c = \mathrm{argmin}_j \|f_j - P_j\|_2$, $j = 1, ..., C$. The vector norm may be the L2 norm as already indicated. However, embodiments of the present invention are not limited to this particular norm and other norms may be used as well, e.g. Lp-norm with p larger or equal to one. A preferred reference point $P_j$ is (0.5; 0.5; ...; 0.5), the centre of a d-dimensional unit hypercube, $[0, 1]^d$, wherein the number of dimensions d coincides with the dimension of the respective feature vector, $f_j$. It is preferred that all the feature vectors have same dimensions d, in particular in embodiments for which they are identified as row vectors of a matrix, and therefore, a common reference point P=Pj for all j may be defined, e.g. the centre of a d-dimensional unit hypercube. Alternative embodiments, however, may have feature vectors of different dimension and define respective reference points. A reference point may also be pre-determined to be different from the centre of a hypercube, e.g. may be a corner of thereof, e.g. P is (0; 0; ...; 0). Choosing the centre of the unit hypercube as a reference point has the advantage that it corresponds to the output of a sigmoid neuron under zero activation, i.e. (0; 0.5) is the centre of point-symmetry of the sigmoid transfer characteristic of each neuron of the output layer and each output channel of a sigmoid-activated output layer takes values located within the unit hypercube. Moreover, the default action of the BN layer 107 is to shift the activations to zero which leads to the preferred point of reference. However, the BN layer 107 may be trained to deviate from its default action during the training phase of the neural network and decoder network, e.g. such that activations are shifted into a saturating region of the sigmoid transfer function.

A decoder network 120 is provided together with the CNN 100 and uses the outputs of the output layer neurons of the neural network, e.g. the feature vectors, as inputs. The decoder network 120 may be a multi-layered neural network and is used to reconstruct, at its output, the original image data sample 101 applied at the input layer of CNN 100 based on the extracted feature vectors, e.g. encodings. For some embodiments of the present invention, the feature vectors of all the output channels may be concatenated into a flat input layer 121. In other, preferred embodiments of the present invention, the feature vectors of all the output channels may be masked first and then concatenated into a flat input layer 121. A masked version of the feature vectors of the output channels may be determined as a function of the provided true class label of the label-tagged image data sample 101, or later, after successful training of the neural network, as a function of the predicted class label. This masked version of the feature vectors of the output channels may be achieved by keeping the feature vector addressed by the provided class label unmodified and setting the components of all the other, unaddressed feature vectors to zero. The decoder network 120 may, for instance, comprise an input layer 121, which may be masked or not, a first dense FC layer 110, a second dense FC layer 111, and a third dense FC layer 112. The number of neurons comprised in each of these decoder network layers 110, 111, and 112 may vary in a task specific way. For the present embodiment, adapted for the MNIST handwritten digit recognition task, the first dense FC layer 110 comprises 512 ReLU neurons, the second dense FC layer 111 comprises ReLU 1024 neurons, and the third dense FC layer 112 comprises 784 sigmoid neurons. A final output data reshaping step 113 rearranges the one dimensional output vector of the third dense FC layer 112 into a two dimensional array of reconstructed image pixels (e.g. rearranging the 784 neuron outputs into a 28x28 image for the MNIST task) for which a grey level of a monochrome pixel is scaled output of the sigmoid neuron addressing this pixel. The modular character of the decoder network 120 may be exploited by connecting the decoder network 120 to the neural network, e.g. CNN 100, during a training phase and disconnecting it thereafter, e.g. during testing or normal image classifying operation of the neural network, e.g. CNN 100. This has the advantage that the decoder network 120 may be used in a multi-task learning approach for improving the performances or avoid overfitting of the neural network, e.g. CNN 100, and/or the classifier 109, whereas a lighter version including only the neural network and the classifier 109 may be used to expedite the processing of image data and image classification of a trained, operational neural network. Alternatively, it is possible to keep the decoder network 120 connected even after training, which may be beneficial for denoising a noisy image data sample 101 applied at the input layer of the neural network at the same time as classifying it, e.g. predicting a class label if the noisy image data sample 101 is lacking a label.

Training of the neural network and the decoder network involves the optimization of the adjustable network parameters (of both the neural network and the decoder network), e.g. filter weights, layer weights, bias terms, mean and variance scale factors of the BN layer 107, hyperparameters such as neuron numbers, filter size, stride, learning rate, etc. Optimization of the adjustable network parameters is typically performed in respect of a cost function which is provided to measure the combined performance of the neural network and the decoder network. That is the cost function is an aggregate cost function in the framework of multi-task learning, e.g. comprises a loss function contribution for the neural network and a loss function contribution for the decoder network. A loss function of the neural network evaluates the predictive power of the classifier which uses the feature vectors of the neural network as inputs. Such a loss function is typically penalizing misclassified image data samples, which increases the loss function. A loss function of the decoder network measures the image reconstruction performance, e.g. by evaluating by how much a reconstructed image deviates from the original image data sample. A non-limiting example of a loss function for the decoder network is a mean-square error function which is a sum of mean-square errors of each reconstructed pixel, averaged over the a number of training samples, e.g. over all the image data samples of an input data set used for training or a subset thereof (e.g. batches, or mini-batches). The loss function for the neural network is selected such that is satisfies additional constraints.

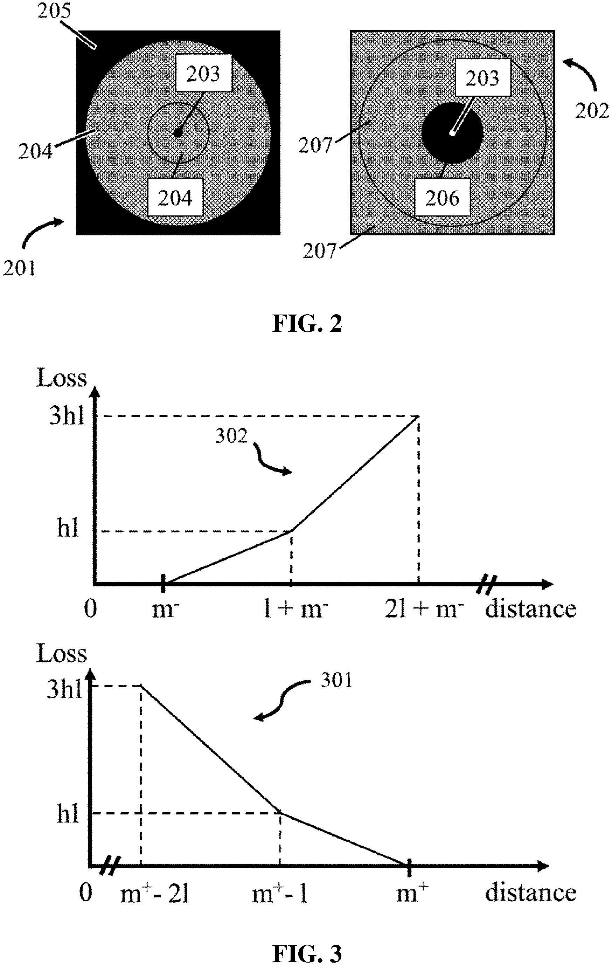

Referring to FIG. 2, the additional constraints of the loss function for the neural network are explained by further splitting the loss function for the neural network into two case-sensitive contributions. A first contribution results from output channels/feature vectors of the neural network which are not addressed by the class label provided in conjunction with the image data sample ("false class output channels") and a second contribution results from the "true class" output channel/feature vector of the neural network which is addressed by provided class label. A two dimensional slice 202 through the centre of a hypercube and parallel to one of its side faces illustrates the constraint on the second contribution from the "true class output channel" of the neural network, whereas a two dimensional slice 201 through the centre of a hypercube and parallel to one of its side faces illustrates the constraint on the first contribution from the "false class output channels" of the neural network. As explained before, the output channels/feature vectors of sigmoid-activated neurons in the output layer of the neural network take values inside a hypercube. The two dimensional slice 202 comprises a reference point 203 at its centre, which coincides with the centre of a hypercube, and a circular region 206 surrounding it, which represents a two dimensional slice through a hypersphere also centred at the refence point 203. Image data samples for which, under the action of the neural network, a mapped feature vector belonging to the true class output channel is located within the circular region 206 of the true class output channel (a hypersphere), are not penalized, e.g. are not incurring any loss under the loss function for the neural network, insofar as the second contribution is concerned. In contrast thereto, if, as a result of the mapping of an image data sample, the mapped feature vector belonging to the true class output channel is located in a region 207 of the true class output channel, outside the circular region 206, then this image data sample is penalized and incurs a loss under the second contribution to the loss function for the neural network. The loss incurred typically increases monotonically with an outward distance from the boundary of the circular region 206, e.g. forms a convex function. Non-limiting examples of such convex loss functions are a piecewise linearly, linearly, or quadratically increasing loss for which the boundary of the circular region 206 (the hypersphere surface) forms a soft margin as to which side feature vectors of image data samples corresponding to the true class output channel are correctly mapped without incurring any loss. The location of this soft margin boundary, e.g. radial distance of the boundary of the circular region 206 form the reference point 203, is adjustable through a parameter m⁻. In analogy, the two dimensional slice 201 comprises a reference point 203 at its centre, which coincides with the centre of a hypercube, and a circular region 204 surrounding it, which represents a two dimensional slice through a hypersphere also centred at the reference point 203. However, image data samples for which, under the action of the neural network, a mapped feature vector corresponding to any of the other "false class" output channels is located within the circular region 204 of any of the false class output channels (a hypersphere), are penalized, e.g. are incurring a loss under the loss function for the neural network, insofar as the first contribution is concerned. If, as a result of the mapping of an image data sample, a mapped feature vector belonging to any of the other "false class" output channels is located in a region 205 of the any of the false class output channels, outside the circular region 204, then this image data sample is not penalized, meaning that no loss under the first contribution to the loss function for the neural network occurs. Similarly, any loss incurred under the first contribution typically increases monotonically with an inward distance (decreases monotonically with an outward distance) from the boundary of the circular region 204, e.g. forms a convex function. Non-limiting examples of such convex loss functions are a piecewise linearly, linearly, or quadratically increasing loss for which the boundary of the circular region 204 (the hypersphere surface) forms a soft margin as to which side feature vectors of image data samples corresponding to the false class output channels are correctly mapped without incurring any loss. The location of this soft margin boundary, e.g. radial distance of the boundary of the circular region 204 form the reference point 203, is adjustable through a parameter m⁺.

FIG. 3 shows an example of a convex, piecewise linear, monotonically increasing second contribution 302 to the loss function of the neural network. The second contribution 302 to the loss function of the neural network is a function of the radial distance from the origin, e.g. the reference point 203, for which a soft margin is given by the threshold parameter m⁻. FIG. 3 also shows an example of a convex, piecewise linear, monotonically decreasing first contribution 301 to the loss function of the neural network. This first contribution 301 to the loss function of the neural network is a function of the radial distance from the origin, e.g. the reference point 203, for which a soft margin is given by the threshold parameter m⁺. The piecewise linear segments of first and second contributions 301, 302 may be characterized by a constant length step l and by step heights measured in units of h*l, defining slopes in units of h. Non-limiting choices for the parameters may be m⁻ = 0.1, m⁺ = 0.9, l = 0.1, and h = 0.2. It is an advantage of the convex first and second contribution 301, 302 to the loss function of the neural network that subgradients exist which may be used in a gradient descent minimization technique of the cost function and only require little storage as compared to higher order schemes. Moreover, the subgradients are typically non-zero when approaching the soft margin threshold for the first and second contribution 301, 302 given in FIG. 3. This has the effect that for each output channel of the neural network, the feature vectors of positive image data samples, e.g. image data samples the class label of which is associated with this particular output channel are steered towards a convex target region, e.g. the circular region 206/ hypersphere, around a reference point, e.g. the reference point 203 at the centre of the hypercube and the hypersphere. Accordingly, the feature vectors of negative image data samples, e.g. image data samples the class label of which is not associated with this particular output channel, but is associated with at least one (e.g. all) of the other output channels, are steered away from a convex target region, e.g. the circular region 206/ hypersphere, around a reference point, e.g. the reference point 203 at the centre of the hypercube and the hypersphere. As a result, training of the neural network implies learning of a mapping of image data samples onto feature vectors which are preferably located within a convex target region close to a reference point of the output channels associated with the class labels of said image data samples, e.g. aims at a convex embedding of image data samples into their class label dependent feature spaces (e.g. convex hyperspheres embedded in hypercube feature spaces). How close the mapped feature vectors are located with respect to a reference point may be controlled by the soft margin threshold parameter m⁻.

Although the constraints on the loss function for the neural network have been explained in respect of sigmoid-activated neurons and related hypercubic feature spaces, they are not necessarily bound to these specific neuron activation functions and feature spaces and similarly apply to other choices, e.g. to hyperbolic tangent activations and non-unit hypercubic feature spaces centred at the origin.

In consequence, the cost function in view of which the network parameters are optimized may be stated as

$$C = \lambda \, Loss_{decoder} + Loss_{neural\ network}, \qquad (1)$$

wherein λ (e.g. λ=0.392) controls how much importance is attributed to the image data sample reconstruction task, which acts as a regularizer for the neural network.

The loss function for the decoder network, $Loss_{decoder}$, may be given as a mean-square error over a subset M of image data samples $s^{(i)}$ (e.g. a subset/mini-batch M comprising 128 image data samples), each image data sample comprising a set of pixels X indexed by row and column indices x, y:

$$Loss_{decoder} = \frac{1}{|M||X|} \sum_{i \in M} \sum_{x,y \in X} \left( s^{(i)}{}_{x,y} - decoder\_out^{(i)}_{x,y} \right)^2 \qquad (2).$$

Eq. 2 teaches that the loss function for the decoder network takes into a count a deviation, e.g. a squared difference, between the pixel values of the i-th image data sample and the pixel values of the reconstruction of the i-th image data sample, decoder_out$^{(i)}$, at the output of the decoder network. The loss function for the neural network may be given as

$$Loss_{neural\ network} = \frac{1}{|M|} \sum_{i \in M} Loss^{(i)}$$

$$Loss^{(i)} = \sum_{k \in C} t_k{}^{(i)} L_{l,h,m}\left(\hat{y}_k{}^{(i)}\right) + 0.5 \left(1 - t_k{}^{(i)}\right) L_{l',h',\sqrt{n}/2-m'}\left(\sqrt{n}/2 - \hat{y}_k{}^{(i)}\right),$$

$$(3)$$

wherein k is a summation index over the label class set C, $t^{(i)}$ is the true target vector encoding the label of the i-th image data sample, $\hat{y}^{(i)}$ is the class label prediction vector for the i-th image data sample, n is the dimensionality of the feature vector space (e.g. n = 16), $L_{l,h,m}$ is the second contribution to the loss function for the neural network, and $L_{l',h',\sqrt{n}/2-m'}$ is the first contribution to the loss function for the neural network. For the piecewise linear, convex loss contributions drawn in FIG. 3, one may select a common length step l = l' (e.g. l = l' = 0.1), a common slope unit step h = h' (e.g. h = h' = 0.2), a first soft margin threshold parameter m' = m$^+$ = 0.9, and a second soft margin threshold parameter m' = m$^-$ = 0.1. A loss contribution $L_{l,h,m}$ may then be explicitly given as

$$L_{l,h,m}(x + m) = H(x) \cdot \left( x - s(x)\frac{l}{2} \right) \cdot h \cdot (s(x) + 1)$$

$$s(x) = \left\lfloor \frac{x}{l} \right\rfloor, \qquad (4)$$

wherein H is the Heaviside unit step function, and s is a floor function counting the current length step number. Alternatively, one may adopt a quadratic form of the hinge loss for the first/second contribution $L_{l,h,m}$ to the loss function for the neural network, e.g.

$$Loss^{(i)} = \sum_{k \in C} t_k{}^{(i)} \max\left(0, \hat{y}_k{}^{(i)} - m^-\right)^2 + 0.5 \left(1 - t_k{}^{(i)}\right) \max\left(0, m^+ - \hat{y}_k{}^{(i)}\right)^2. \quad (5)$$

A calculation of the loss function of the neural network is simplified in the sense that it may be conveniently decomposed into a sum of output channel losses which may be computed independently form each other in a parallelized fashion.

The target vector encoding for the labels of the image data samples may be obtained by a one-hot/one-of-C encoding scheme, e.g. $t_k$ = 1 if k = class(label of image data sample) and else $t_k$ = 0, such that $\sum_k t_k$ = 1. The prediction vector may be chosen such that its components correspond to the L2 normed distances of the feature vectors $f_k$ of each of the output channels from a pre-determined reference point $P_k$, e.g. $\hat{y}_k = \|f_k - P_k\|_2$, from which a class label is predicted through an argmin selector.

Training of the neural network and the decoder network may be achieved by a training algorithm, e.g. through a variant of the backpropagation algorithm, e.g. one of gradient descent, stochastic gradient descent on mini-batches, adaptive momentum learning, quickprop, RMSprop, conjugate gradient, Adadelta, Adagrad, Nesterov, Adam, etc. According to a backpropagation training algorithm, the cost function to be optimized during training (e.g. reduced) is first evaluated in a forward pass during which the image data sample is applied at the input layer of the neural network and is progressively propagated through both the neural network and the decoder network until all the output neurons and prediction vectors are updated. This is followed by a determination of the gradients of the network parameters, which is typically obtained by a backward propagation of a combined error signal through the neural network and decoder network, respectively. A combined error signal may be obtained as a sum of deviations between the reconstructed and the original image data sample, e.g. as measured by the decoder loss function, and deviations between the predicted class label and the true class label taken into account the distances of feature vectors from a reference point in the feature space, e.g. as measured by the neural network loss function. Eventually the network parameters are updated by subtracting therefrom a scaled version of the determined gradients (gradient descent), wherein the scale factor itself may be a tuneable learning parameter, e.g. a learning rate (e.g. a constant learning rate at 0.001 for an Adam optimizer) which may be decreased during learning so as to further improve regularization and/or avoid overfitting.

In an exemplary embodiment of the present invention, the handwritten digit MNIST data set is provided as labelled input data set. This data set comprises 60k training image data samples of labelled (digit class) handwritten digits and 10k test image data samples of labelled handwritten digits. The larger training image data set is generally used for training of the network parameters, whereas the smaller test image data set is used to assess performance of the trained neural network, e.g. under conditions as they are met when the trained neural network is used to classify image data sample which have not been annotated by a label. For the MNIST data set, each image data sample is a 28*28 pixel, fixed-sized greyscale image of a centred (centre of mass) digit selected from a range zero to nine. For more variability in the input data set, each image data sample may be pre-processed by randomly shifting it up to 2 pixels in a horizontal and/or vertical direction and missing parts of the so shifted image data samples may be filled in by zero-padding. The pre-processed image data samples are then applied to the input layer of the CNN 100. A first intermediate convolutional layer 102 applies ReLU activations on each of the resulting 20x20*256 neurons after convolution with stride one between the image data sample and a group of 256 independent 9x9 filters. Thereafter, a second intermediate convolutional layer 103 also applies ReLU activations on each of the resulting 6x6*256 neurons after convolution with stride two between the transformed image data sample at the first intermediate convolutional layer 102 and a group of 256 independent filter stacks, each filter stack comprising a 9x9*256 filter. The outputs of the second intermediate convolutional layer 103 are flattened into a one dimensional structure in a flattening step 104 and form the input to a third intermediate dense (FC) layer 105 comprising 160 sigmoid-activated neurons, wherein the activations of the neurons of the third intermediate dense (FC) layer 105 are shifted and scaled by a BN layer 107 prior to the application of the sigmoid transfer function. The output layer of the CNN 100 is obtained by reshaping, in a reshaping step 106, the 160 neurons of the third intermediate dense (FC) layer 105 into a 10x16 matrix structure, wherein each of the ten row vectors forms an output channel of the CNN 100, providing a 16 dimensional feature vector for this output channel. Each of the ten output channel is associated with one of the digit classes zero to nine. A classifier 109 first determines prediction vectors as the relative L2 distance of the feature vector of each output channel with respect to a reference point P, which is pre-determined as the centre point of 16 dimensional hypercube $[0, 1]^{16}$. The predicted class label is determined as the index of the prediction vector component which is minimal among all components, e.g. as the output channel (out of the output channels labelled zero to nine) for which the relative L2 distance of its feature vector with respect to a reference point P is smallest. During training a decoder network 120 receives the flattened and masked output of the neural network at its input layer, wherein the true class feature vector is kept without modification and all the other feature vectors (false output class channels) are set to zero. The decoder network processed its inputs by a first dense FC layer 110 comprising 512 ReLU neurons, a second dense FC layer 111 comprising 1024 ReLU neurons, and a third dense FC layer 112 comprising 784 sigmoid neurons, and a output data reshaping step 113 rearranging the 784 neuron outputs into a two dimensional structure corresponding to the 28*28 image pixels of MNIST image data samples. The CNN 100 and decoder network 120 count each about 6.8 million and 1.4 million adjustable/trainable parameters, respectively (weights, biases, BN layer parameters, hyperparameters such as learning rate, Adam optimizer constant for exponential moving averages of gradients and its variances, etc.), that is about 8.2 million trainable parameters, which is less than the amount of trainable parameters generally encountered in deep neural networks of more than five layers, e.g. ten layers or more, e.g. twenty to fifty layers. Moreover, only 6.8 million parameters of the neural network CNN 100 are used to predict handwritten digit classes. In a multi-task learning approach, the combined network CNN 100 and decoder network 120 are trained using the backpropagation algorithm with an Adam optimizer at constant leaning rate 0.001 and mini-batches comprising 128 randomly drawn image data samples each. The cost function for optimization of the network parameters is the one of Eq. 1 with $\lambda = 0.392$ in combination with Eq. 2 and Eq. 5 for the corresponding loss functions of the decoder network 120 and the CNN 100. Embodiments of the resent invention may be trained with only a subset of the training image data set, which enables bootstrapping and cross-validation techniques.

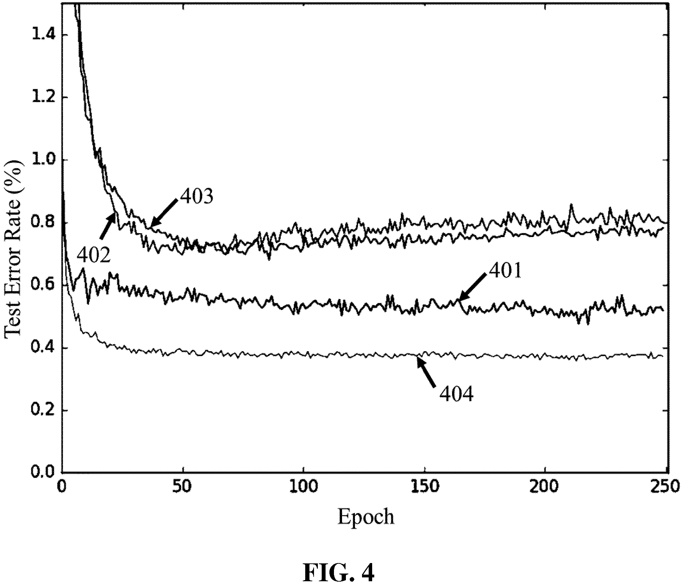

FIG. 4 shows test error rates of several implementations of neural networks, e.g. the misclassification count over the test image data set, obtained for the MNIST task as a function of the number of training epochs averaged over 20 instantiations of each neural network (20 different initializations of the network parameters). Test error curve 404 relates to the test error rates obtained with the above described embodiment comprising the CNN 100 and the decoder network 120. Test error curve 401 relates to a test error rate obtained from a baseline comparison. It corresponds to a CNN for which the third intermediate dense (FC) layer 105 comprises ten softmax-activated output neurons, one for each digit class, and for which the categorical cross-entropy loss function is used, in place of Eq. 5, to measure performance of the neural network. Furthermore, the input to the decoder network is not masked, meaning that the complete, unmodified, softmax-activated prediction vector is used as input to the decoder network. Hence, the baseline approach is not taking into account the L2 distances of feature vectors of each output channel with respect to a reference point, but it yields scalar outputs for each output channel which are interpreted as class probabilities conditional on the image data sample. The highest predicted class probability determines the predicted class label. The baseline approach, compared to the above described embodiment of CNN 100 and decoder network 120, contains slightly less trainable network parameters, e.g. about 5.4 million parameters for the neural network and about 1.3 million parameters for the decoder network 120 yielding a total of about 6.8 million trainable network parameters. Test error curve 403 relates to the test error rates obtained with the above described embodiment comprising the CNN 100 and the decoder network 120, but a different loss function for the neural network CNN 100 is used. This modified loss function for the CNN 100 is suitable for steering the feature vectors corresponding to the true class output channel away from a convex target region around a reference point and is also suitable for steering the feature vectors corresponding to at least one of the other "false class" output channels, e.g. to all the other "false class" output channels, towards the convex region around a reference point. In this sense, it has an effect which is opposite to the loss function for the neural network given Eq. 3 or Eq. 5. The "inverted loss" function which is used to obtain the test error curve 403 reads:

$$Loss^{(i)} = \sum_{k \in C} t_k^{(i)} \max\left(0, m^+ - \hat{y}_k^{(i)}\right)^2 + 0.5 \left(1 - t_k^{(i)}\right) \max\left(0, \hat{y}_k^{(i)} - m^-\right)^2 \quad (6)$$

Test error curve 402 relates to the test error rates obtained with the same configuration as for test error curve 403, except that the sigmoid activation function of the output layer neurons of the neural network CNN 100, e.g. the neurons of the third intermediate dense (FC) layer 105, has been substituted by a squashing function of the form $\sigma(z) = z^2/(1+z^2)$ and a reference point for all output channels has been set to the origin of the feature space, e.g. $P_j = P = (0, 0, ..., 0)$.

Test error curves 401 and 404 quickly stabilize after an initial decrease as the number of training epochs is further increased, whereas test error curves 402 and 403 show slight increases in the test error rates after an initial minimum. This hints to a starting overfitting of the respective networks. It is apparent from the reported test error curves in FIG. 4 that the neural network trained according to above described embodiment (corresponding to test error curve 404) performs best, among the four investigated neural networks of differing implementation, for the test image data set of the MNIST handwritten digit classification task. Table I also reports test results for the MNIST handwritten digit classification task, wherein table rows are referring to one of the test error curves of FIG. 4. For a constant learning rate, the test error rate and its variability as well as an irregularity metric are tabulated. All the tabulated networks have been trained with a decreasing learning rate (e.g. decay parameter of 0.95) too, for which test error rate and its variability and a single best error rate are reported. Test error rates of Table I are averaged over 20 network parameter instantiations and over 100 training epochs, typically the last 100 training epochs during which networks are trained, e.g. training epochs 150 to 250. The variability associated with the test error rate of a given network type measures the standard deviation of this test error rate with respect to network training parameter statistics averaged over 100 training epochs, wherein a standard deviation of a test error rate with respect to network training parameter statistics is determined as the estimated standard deviation of the test error rate for 20 random samples of network training parameter instantiations (per network type). Decreasing the learning rate generally forces the different neural networks to settle at a local optimum for their trainable parameters from which it cannot escape easily. Indeed, the decreased learning rate leads to ever smaller network parameter updates as the number of training epochs grows such that they are effectively frozen at a local optimum of the overall cost function. If the learning rate is not progressively decreased, the different networks are capable of jumping from one local optimum of the overall cost function to another one, which results in some testing noise for the reported test error rates as training moves from epoch to epoch. This implies that continuing training of the networks does not necessarily lead to a convergence of the test error rates, as illustrated in both FIG. 4 and by the irregularity column entries of Table I. An irregularity value for the test error curve associated with a given network type is obtained by averaging a standard deviation of this test error rate with respect to training epoch statistics over the 20 random samples of network training parameter instantiations, wherein a standard deviation of a test error rate with respect to training epoch statistics is determined as the estimated standard deviation of this test error rate sampled over 100 consecutive training epochs and at a given sample of network training parameter instantiation. If convergence is enforced by virtue of a decreasing learning rate, the irregularity metric is not providing useful insight any longer. Therefore, it is substituted by the single best test error rate with regard to instantiations of network training parameters in this case.

It is of advantage that embodiments of the present invention achieve state of the art performance for MNIST test error rates (e.g. 0.32 % for test error curve 404) without the requirement of using ensemble or voting committee techniques which are expensive to implement and/or train. Moreover, embodiments of the present invention achieve state of the art performance for MNIST test error rates for a variety of random instantiations of the network, as indicated by the small variability (e.g. 0.03 % for test error curve), which makes the described neural network training method more predictable in terms of expectable test error rates and also reduces a training time as network training parameter instantiation statistics may not be acquired. Embodiments of the present invention converge to state of the art performance for MNIST test error rates even at larger, non-decreasing learning rates, as indicated by its related small irregularity measure (e.g. 0.02 % for test error curve 404).

**Table I: Test results for the MNIST task**

| Network acc. to | Test Error Rate | Irregularity |
|---|---|---|
| **Constant learning rate** | | |
| Test Error Curve 401 (baseline) | (0.52 ± 0.06)% | 0.06 % |
| Test Error Curve 402 (squashing, origin ref. point, loss Eq. 6) | (0.79 ± 0.09) % | 0.05 % |
| Test Error Curve 403 (sigmoid, hypercube center ref. point, loss Eq. 6) | (0.76 ± 0.07) % | 0.05 % |
| Test Error Curve 404 (sigmoid, hypercube center ref. point, loss Eq. 5) | (0.37 ± 0.03) % | 0.02 % |
| **Decreasing learning rate** | | |
| | | Single best |
| Test Error Curve 401 (baseline) | (0.42 ± 0.03) % | 0.38 % |
| Test Error Curve 402 (squashing, origin ref. point, loss Eq. 6) | (0.70 ± 0.08) % | 0.53 % |
| Test Error Curve 403 (sigmoid, hypercube center ref. point, loss Eq. 6) | (0.72 ± 0.07) % | 0.62 % |
| Test Error Curve 404 (sigmoid, hypercube center ref. point, loss Eq. 5) | (0.35 ± 0.04) % | 0.32 % |

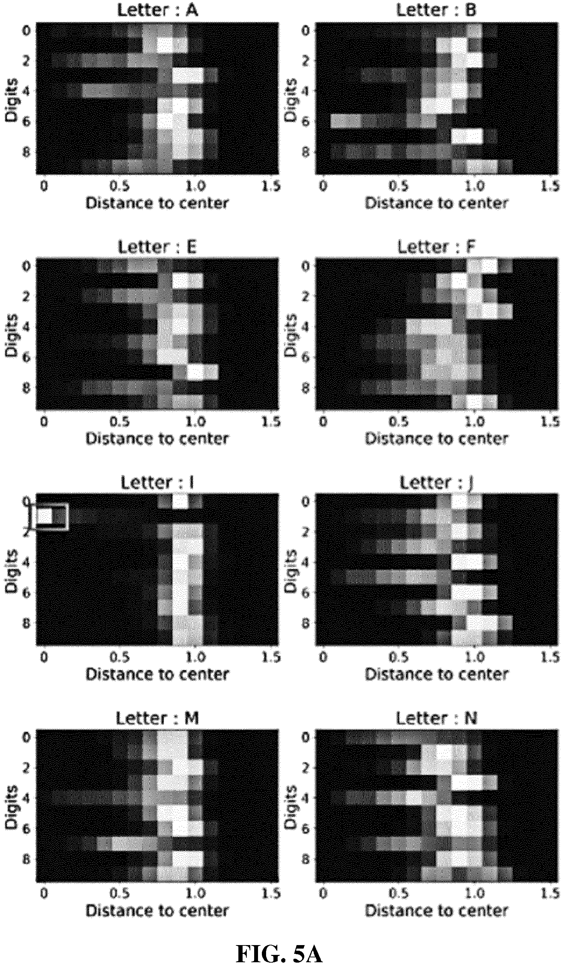

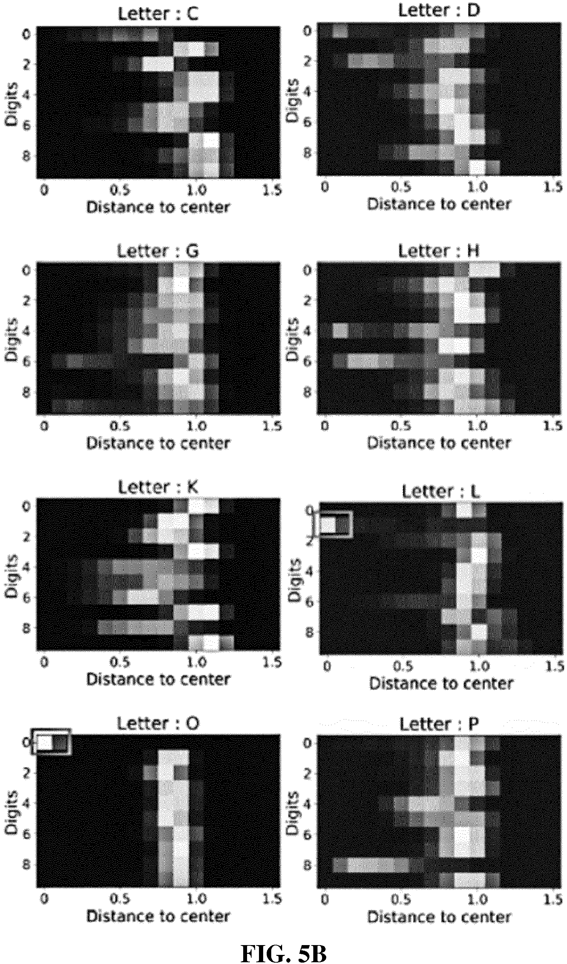

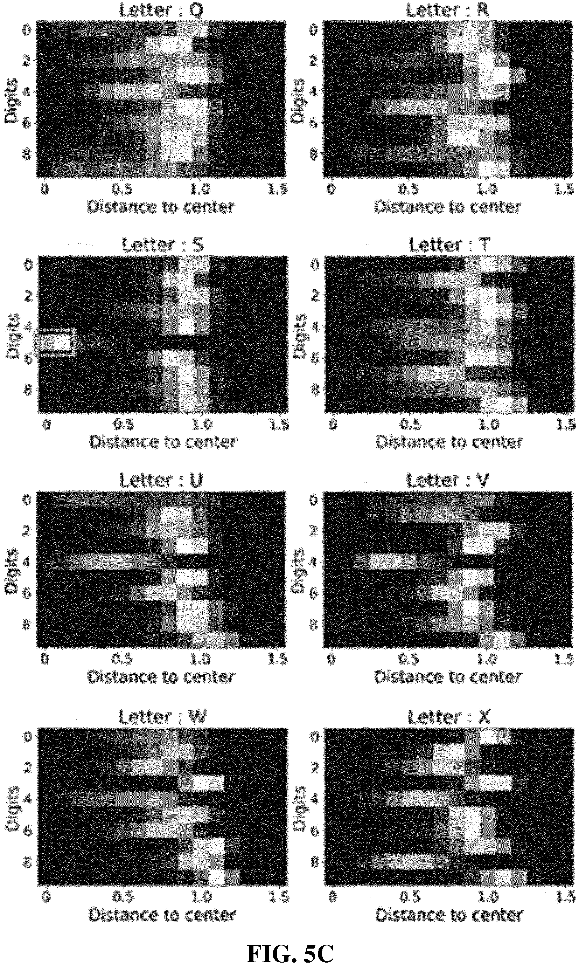

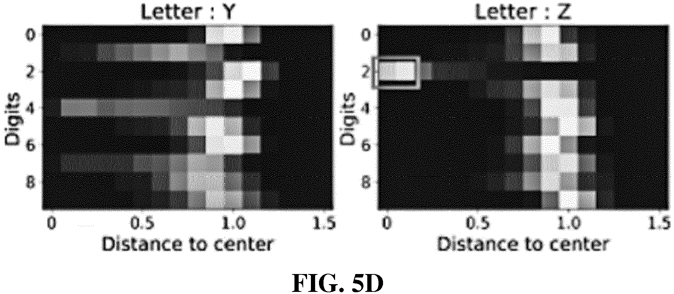

It is an advantage of embodiments of the present invention that anomalies in the image data samples applied to the neural network after a completed training phase, e.g. during testing or use of the neural network for classifying images, may be detected. Indeed, the loss function for the neural network being suitable for steering the feature vectors corresponding to positive samples of a given output channel into a convex target region for this output channel and also being suitable for steering, for all the other output channels, the feature vectors corresponding to positive samples into another target region, different from the convex target region and away therefrom, evaluating the position of the feature vectors of all output channels with respect to their convex target region and/or the other target region may yield an indication of a possible anomaly. For instance, it may be the case that the applied image data sample under test results in a feature vector mapping for which none of the output channels has a feature vector inside a convex target region and/or most or all of the output channels have their feature vectors located in a region of the feature space which is penalized both by the first and the second contribution to the loss function of the neural network. Such case may then be assigned to an anomaly. This is illustrated in FIG. 5A to 5D for the EMNIST image data set comprising image data samples of handwritten lower and upper case letters sharing the same format as the MNIST image data samples. Samples of the EMNIST data set representing the uppercase letters A-Z have been applied to a neural network, e.g. CNN 100, trained in accordance with an embodiment of the present invention. The L2 distance of the feature vector of each output channel relative to a reference point has been recorded as count in an associated distance interval. Distance intervals are arranged along a horizontal axis for the subplots of FIG. 5A through 5D and the digit class an output channel is associated with is arranged on a vertical axis of each of the subplots. A distribution for the feature vectors corresponding to the mapped image data samples of EMNIST uppercase letters A-Z is thus obtained in respect of each digit class/output channel and of each distance interval. Brighter tones of grey indicate more occurrences. For the letter A, for example, the feature vectors of each output channel are located outside a convex target region around a reference point as measured by their relative L2 distance to this point, e.g. the distribution of L2 distances for samples of letter A does not have any counts in the distance interval [0, 0.1]. The classifier may therefore correct its predicted class label in a further step to indicate an anomaly by counting the number of output channels the feature vectors of which have a L2 distance exceeding a threshold parameter, e.g. the soft margin threshold parameter $m^-$. Rectangles in FIG. 5A to 5D indicate possible confusions for which the neural network may interpret an uppercase handwritten letter image data sample as a sample of a handwritten digit, e.g. 'O' interpreted as zero, 'S' as five, 'I' as one, and 'Z' as two.

Training neural networks, in particular deep neural networks, comprising millions or billions of trainable network parameters typically requires very large input data sets for each network parameter to be learnt by inference. Therefore, neural networks are difficult to train if input data is scarce. It is common in machine learning to augment an original input data set by generating additional image data samples for training of the neural network. Generation of additional image data samples is often achieved in the image space, e.g. by applying random translations on the handwritten digit image samples as already described in relation to the MNIST task. However, more image pre-processing may be involved, for instance by rotating and shifting the image data samples or by warping. In a different approach, new image data samples for training are generated in the feature space, e.g. by interpolating between two known points in the feature space which both corresponding to mapped image data samples.

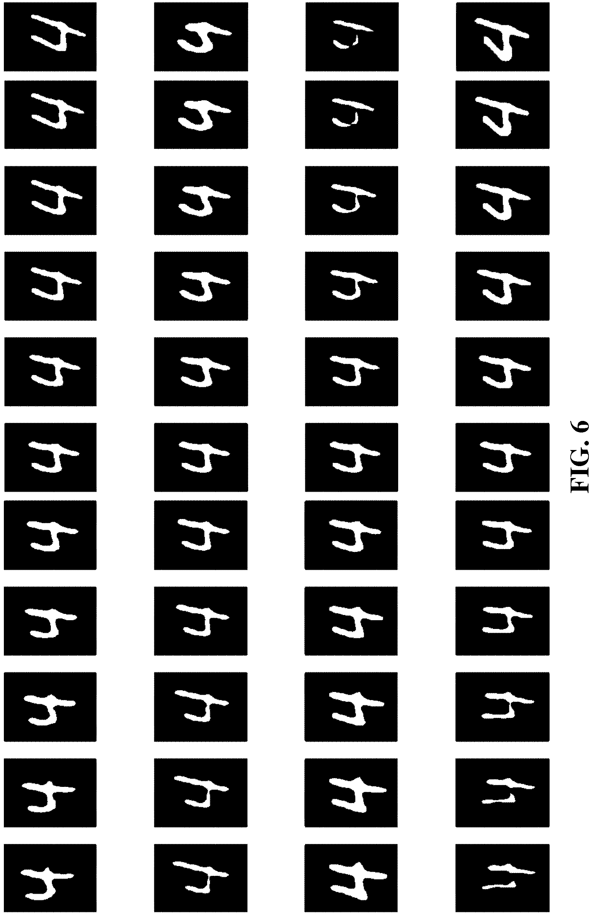

Embodiments of the present invention are now described with regard to data augmentation and/or data generation methods. These methods are typically implemented after the neural network and decoder network have been trained to reach an optimal test error rate, but may also be provided for a neural network and a decoder network which have only been trained partially. It has already been explained that the output layer of the neural network provides a set of feature vectors, one per image class, which are mappings of the image data sample applied at the input layer of the neural network. It has also been explained that a decoder network is trained to reconstruct the image data sample based on its representation at the output layer of the neural network as feature vector associated with the class label of the applied image data sample. In the following, this is referred to as first reconstruction or first reconstructed image data sample. Therefore, one may generate or synthesize a second reconstructed image data sample with the same label as the first reconstruction by selecting a point, e.g. randomly selecting a point, inside the convex target region, around a reference point, which is associated with this (same) label. The selection may include adding a controlled perturbation, e.g. controlled in magnitude and/or direction, to the point designated by the tip of the feature vector, anchored at the origin, whose output channel is associated with this (same) label, provided that such point is located inside the convex target region. The so selected point may be used as masked input to the decoder network, meaning that all the non-addressed output channels have their feature vectors set to zero. At the output of the decoder network a second reconstructed image with the same label as the first reconstruction is then obtained. If points in convex target regions of each output channel are sampled at random, not relative to an existing feature vector mapping of a first image data sample, new labelled (reconstructed) image data sample may be synthesized at the decoder network output if these sampled and masked (according to the output channel from which they were sampled) points are sequentially applied at the input of the trained decoder network. This generates new labelled image data samples which are obtained through sampling in the feature space. If the selection of points is achieved by applying a perturbation to the feature vector of an existing image data sample mapping, the newly synthesized image data set is a perturbed/ modified/distorted version of the set of first reconstructions and a degree of perturbation/modification/distortion may be controlled by the magnitude and/or direction of the perturbations added to the existing feature vectors mappings of image data samples. This is possible as individual components of the feature vector of each output channel may be identified with an invariant transformation of a universal prototype, e.g. magnification and/or rotation of a prototype digit image. In the context of the present invention, a reference point of each output channel may be selected as a prototyping feature vector for this particular output channel/class. That is a sensitive choice given the characteristic steering behaviour of the loss function for the neural network, e.g. feature vectors corresponding to positive samples for a particular output channel are steered towards the convex target region around a reference point. If the prototyping feature vector is fed, as a masked input, through the decoder network, a "universal" prototype image of this class is output. Universality depends, of course, to some extent on the training data set, the particular architecture of the neural network and the decoder network, the training parameter instantiation, training algorithm, etc. Applying perturbations to the components of each prototyping feature vector yields invariant transformations of the prototype image at the decoder network output, wherein the invariance is an invariance of the trained neural network and decoder network with respect to transformations of the image data samples at the input. FIG. 6 illustrate learnt invariant transformations corresponding to perturbations applied to the prototyping feature vector of the digit class "four". In FIG. 6, the sixth image of each row corresponds to an unperturbed prototype of the digit class "four", whereas the remaining images of each row are the result of altering exactly one component of the prototyping feature vector in steps of 0.005 from 0.45 to 0.55. A learnt invariant feature may correspond to the tilt of the handwritten digit "four" for the first row of FIG. 6, to the relative height differences of vertical strokes for the second row, to a stroke thickness for the third row, and to the degree to which a handwritten digit "four" is closed at its top for the last row may The applied perturbations are typically controlled such that the perturbed prototyping feature vectors are still located within the convex target region. Moreover, it is possible to select points in the convex target region for second reconstructions which are obtained by way of interpolation between two or more known feature vector mappings of known image data samples.

It is an advantage of embodiments of the present invention that prototyping feature vectors may be pre-determined by the structure of the neural network and the classifier; training the neural network and the decoder network implies an adaptation of the trainable network parameters to this constraint. Therefore, image class prototypes and their invariant features learnt by the neural network and the decoder network may be easily observed at the decoder network output. Furthermore, one may easily investigate the learnt invariant features in the image space as invariant image transformations by applying controlled perturbations to the prototyping vectors and reconstructing the result thereof. Moreover, one may gain insight in the learning mechanism of the neural network and/or decoder network by inspecting the evolution of prototypes.

It is often the case that the dimensionality of the feature vector of each output channel is smaller than the input dimension of the image data sample, e.g. the number of pixels composing the image data sample and/or the number of grey values for each pixel of the image data sample. For such cases, the trained neural network and trained decoder network will result in a lossy mapping of an image data sample onto one or more feature vectors, e.g. information originally contained in the image data sample is lost in the learnt mappings. Despite this loss of detailed information, it is still possible to extract characteristic high level features which allow for an efficient solution of the task at hand, e.g. classification of images. For example, it may be the case that the arcs of a digit, e.g. six, are recognized as high level feature activations but the precise locations of these arcs may be lost, as they may not be crucial for solving the task. In this sense, the output layer of the neural network is learning abstractions of image data samples sharing a number of common underlying patterns. In consequence, the second reconstructed image data samples at the decoder network output may also present too abstract variants of a member of a particular class of images for which fine but typical details are absent. The fine but typical details may be considered as inherent image data sample noise which is substantially always present in an image data sample randomly drawn from an often unknown prior distribution for each class. Therefore, some embodiments of the present invention may generate synthetic image data samples in a hybrid approach combining sampling or interpolation from the convex target regions with distortions in the image (input) space. This may be achieved by combining a deviation (e.g. X-Xrec) of the first reconstruction (Xrec) and the image data sample (X) forming its basis with a second reconstruction (Xmod), for instance by adding the difference between the image data sample and its first reconstruction to the second reconstruction: Xmod + X-Xrec. The second reconstruction may be obtained by a randomly selected point in the convex target region of the addressed output channel, by a perturbation to the first selected point which is the feature vector mapping of the original image data sample (X), through an interpolation of known feature vector mappings into the convex target region of the addressed output channel comprising the first selected point, etc. If the combination of reconstructed image data samples in the image space exceeds an allowed range of pixel values, the newly synthesized image data sample (Xmod + X-Xrec) may be re-centred and/or re-scaled or clipped so as to again lie within the allowed range. The difference between the image data sample and its first reconstruction restores the missing fine details which may be considered as input noise to the image data samples and which contribute to the noise robustness and/or regularization of the neural network and decoder network when trained.

For the embodiment described in relation with FIG. 1, the hybrid data augmentation has been conducted with a trained neural network and decoder network. The newly synthesized image data samples are then added to the original input data set to form an augmented input data set of labelled image data samples, which may be used, in a subsequent step, as the input data set provided for training a neural network for classifying images. A neural network for classifying images may be the same neural network and decoder network that was used in the data augmentation step, in which case the adjustable network parameters are further updated to reach a better (local) optimum or are re-initialized and re-trained. Alternatively, a neural network for classifying images may be a different neural network and decoder network, e.g. a neural network and decoder network of a different architecture (e.g. more or less neurons in an intermediate layer, different activation functions, etc.). Table II reports test error result, variabilities thereof, as well as the associated irregularities for the MNIST handwritten digit task for which hybrid data augmentation (DA) has been conducted with a trained neural network and decoder network, e.g. the neural network and decoder network that led to test error curve 404 and trained for 1500 epochs. Neural networks and decoder networks are re-trained entirely. The performance metrics that are used in Table II are the same as for Table I, e.g. averaged results over 20 instantiations and 100 epochs, respectively. Both the baseline network and the neural network and decoder network trained according to an embodiment of the present invention benefit, in terms of achieved test error rates, from the larger training data set comprising both the original image data samples and their augmented counterparts. Decreasing the learning rate by multiplying it with a factor of 0.99 at every epoch further improves the test error rate.

New image data samples may also be generated on the fly, while the neural network and the decoder network are trained. Both may be trained for a given amount of epochs, for instance, and only thereafter new synthetic image data samples are generated and immediately made available for training by adding them to the input data set.

It is an advantage of embodiments of the present invention that the target regions around a reference point are convex and supported by the loss function of the neural network. Convexity of the target region of each output channel ensures that interpolated feature vectors based on two or more known feature vector mappings of existing image data samples again are located inside the convex target region and hence provide samples of feature vector mapping sharing the same class (label). Therefore, interpolated feature vectors are an efficient way to explore the feature space of each class and/or to generate new, synthetic labelled image data samples. Generation of synthetic labelled image data sample provides an efficient way of leveraging existing but scarce input data sets for the purpose of learning (deep) neural networks.

**Table II: Test results for the MNIST task with data augmentation (DA)**

| Network type | Test Error Rate | Irregularity |
|---|---|---|
| **Constant learning rate** | | |
| Baseline | $(0.52 \pm 0.06)$ % | 0.06 % |
| Baseline with DA | $(0.44 \pm 0.05)$ % | 0.06 % |
| Test Error Curve 404 (sigmoid, hypercube center ref. point, loss Eq. 5) | $(0.37 \pm 0.03)$ % | 0.02 % |

(continued)

| Network type | Test Error Rate | Irregularity |
|---|---|---|
| **Constant learning rate** | | |
| Test Error Curve 404 (sigmoid, hypercube center ref. point, loss Eq. 5) with DA | (0.33 ± 0.03) % | 0.03 % |
| **Decreasing learning rate** | | |
| | | **Single best** |
| Test Error Curve 404 (sigmoid, hypercube center ref. point, loss Eq. 5) with DA | (0.30 ± 0.04) % | 0.26 % |

It is known in the field that labels of image data sets may be noisy labels, e.g. are corrupted by some label noise, such that they deviate from a true underlying label. This may be due to incomplete, missing, or non-exhaustive labelling in some cases, faulty or ambiguous label assignment in other cases. Also for the MNIST handwritten digit test data set some inconsistencies with respect to the ground truth are known. This label noise generally has the effect that a correctly predicted classification incurs an unjustified large loss or cost during the training phase, discouraging the neural network to correctly predict a label for an image data sample and rather learn to purposely misclassify this image data sample. Here, correctly predicting and purposely misclassifying are interpreted in terms of the underlying true label for which the provided label constitutes a noisy version. The purposely misclassified image data sample have to be learnt by the neural network on an individual basis and thus represent an overfitting mechanism which leads to inconsistencies when the trained neural network is tested on unseen test image data samples.

Some embodiments of the present invention provide a way to alleviate the effects of this forceful (loss) penalization introduced by noisy labels. This may be achieved by modifying the loss function for the neural network such that is still suitable for steering the feature vectors corresponding to positive samples of a given output channel into a convex target region for this output channel, but is not any longer suitable for steering, for all the other output channels, the feature vectors corresponding to positive samples into another target region, different from the convex target region and away therefrom. In particular, the modified loss function for the neural network may be suitable for steering, for all but one other output channel, the feature vectors corresponding to positive samples into another target region, different from the convex target region and away therefrom. The one other output channel may not experience any loss under the modified loss function for the neural network. As a result the one other output channel and depending network parameters may be rendered insensitive to an image data sample carrying a noisy label, e.g. depending weights are not updated due to the lacking change in the loss function for the neural network. This concept may be extended to more than just one other output channel, e.g. two other output channels or more than two other output channels. For some embodiments of the present invention this zero-loss contribution of the one or more than one other output channel may be achieved by momentarily changing the label representation, e.g. the temporarily changing the one-hot/one-out-of-C label vector encoding, for the first contribution to the loss function of the neural network. For instance, if only one other output channel is made loss-free, the label vector encoding for substitution $(\tilde{t}_k)$ of the original label vector encoding $(t_k)$ may be expressed as

$$\tilde{t}_k^{(i)} = t_k^{(i)} + \delta_{k,r}; \quad r = \underset{m \neq c(i)}{\mathrm{argmin}}\left(\hat{y}_m^{(i)}\right) \qquad (7)$$

and a modified loss function for the neural network may read

$$Loss^{(i)} = \sum_{k \in C} t_k^{(i)} L_{l,h,m}\left(\hat{y}_k^{(i)}\right) + 0.5\left(1 - \tilde{t}_k^{(i)}\right) L_{l',h',\sqrt{n}/2 - m'}\left(\sqrt{n}/2 - \hat{y}_k^{(i)}\right) \qquad (8)$$

or

$$Loss^{(i)} = \sum_{k \in C} t_k^{(i)} \max\left(0, \hat{y}_k^{(i)} - m^-\right)^2 + 0.5\left(1 - \tilde{t}_k^{(i)}\right) \max\left(0, m^+ - \hat{y}_k^{(i)}\right)^2. \qquad (9)$$

In equation Eq. 7 the momentarily modified label vector encoding adds another "one" to the one-out-of-C vector $t_k$, wherein another "one" is added for the r-th component. It is also seen from Eq. 7 that the r-th component is determined as the component for which the prediction vector $(\hat{y})$ is minimal, e.g. the output channel for which a L2 distance of the feature vector relative to a reference point is minimal, and which does not coincide with the true class output channel of the i-th image data sample, c(i). This means that for this particular embodiment, the true class output channel, which is accounted for by the second contribution to the loss function for the neural network, is excluded from the zero-loss modification. As the neural network evolves under training, the classifier therefore tries to reconciliate the two contradicting expectations of correctly classifying image data samples even for noisy labels and allowing an alternative label, e.g. the label which the neural network classifier estimates the underlying true label after having seen many similar image data samples. The alternative label is afforded by the zero-loss contribution of one of the other, non-addressed output channels and it may be identified as the non-addressed output channel for which the feature vector is located in an otherwise loss-penalized region of the feature space, e.g. close or even inside the convex target region around a reference point. Table III is a confusion matrix which indicates how an alternative label, which may be assigned to the one other output channel, is distributed in respect of the provided label. This example relates to a classification of about 18000 video frames of a soccer game video sequence into one of the following classes goal, shot, free kick, and corner. It sheds light on the fact why a single predicted class label may sometimes not be sufficient as some image data samples may also fit an alternative class. For instance, even humans may have, in some circumstances, trouble to tell apart a shot and a free kick.

**Table III: Confusion matrix between provided and alternative label for a video frame classification task**

| | | Alternative label | | | |
|---|---|---|---|---|---|
| | | Shot | Goal | Corner | Free kick |
| Provided label | Shot | 0 | 76 | 1405 | 1122 |
| | Goal | 1268 | 0 | 476 | 35 |
| | Corner | 2858 | 107 | 0 | 25 |
| | Free kick | 3459 | 8 | 52 | 0 |

It is advantage of embodiments of the present invention that a trained neural network and decoder network may be used to detect a discrepancy between a predicted label and a provided image data sample label. The so detected discrepancies may serve the purpose of cleaning an input data set in a further step. Alternatively, a relation between feature vectors of the (output) channels addressed by an alternative label, e.g. assigned to one of the other channels for which a loss contribution is removed, and by the label of a provided image data sample may be detected. Based on the result of the detected relation, the currently provided label of the image data sample may be rejected together with the image data sample itself, may be re-labelled, or may be assigned to a new class of labels. A detected relation may include, for example, a verification of the fact whether both feature vectors of the (output) channels addressed by an alternative label and by the label of a provided image data sample are located inside the convex target region. Another non-limiting example of a detected relation may include verifying which one of the normed distances of the feature vectors of the (output) channels addressed by an alternative label and by the label of a provided image data sample is closest to the pre-determined reference point.

A same or different neural network and decoder network may be trained using the cleaned input data set or at least a subset thereof as training input. This has the advantage that more consistent and improved test error rates are expected. Moreover, a cleaned data set may be useful for other machine learning methods too, which otherwise suffer from mislabelled, missing or incomplete labelled image data samples. A cleaned input data set may be achieved by discarding or re-labelling image data samples for which a discrepancy has been detected, e.g. discarding or re-assigning labels for mislabelled or incompletely labelled image data samples and/or assigning labels to image data samples which lack a label. In some cases for which an ambiguity between different label assignment exists, cleaning the input data set may also comprise the setup of assigning multiple labels to an image data sample or introducing a new class of labels, e.g. a class "label 1 or label 2" next to the exclusive classes "label 1" and "label 2" for non-ambiguous image data samples.

Table I reports results for the MNIST handwritten digit classification task but the described methods for training neural networks for classifying images may also be trained with and tested for other data sets/tasks, for instance on the FashionMNIST image data set. This data set comprises image data samples labelled according to the following classes of T-shirt, trousers, pullover, dress, coat, sandal, shirt, bag, sneaker, and ankle boot. FashionMNIST is known to be a "harder" task on comparison to the MNIST task. Embodiments of the present invention achieve a test error rate of 7.8 %.

Training a neural network and decoder network on the EMNIST image data set according to an embodiment of the present invention and further performing the data augmentation step described before, may provide an alternative approach to the generation of captchas for an automated Turing test, e.g. telling apart humans and machines. Other domains of application of the described embodiments of the present invention may include pose estimation, foreground and background detection and/or removal, and image segmentation for which classification may correspond to the label assignment step for the pixels of an image treated as a Markov random field (graphical model).

Embodiments of the present invention may further be adapted to solve a combined classification-regression task. This may be useful in cases for which objects first need to be recognized and label-tagged in an image data sample and particular object classes are input to a regression task in a second step, e.g. first recognizing and labelling cars in image data samples and then perform regression to predict a cylinder capacity, price, etc. based on the extracted car image data (e.g. including relative information on height and length, number of doors, etc.). A simpler example is given by the combined classification-regression task which consists in classifying slopes of line segments according to pre-determined angular ranges, e.g. four angular ranges (classes) spanning the overall space of 0° to 180°-oriented line segments. The regression then predicts the precise slope angle. To achieve regression of the (class-specific) dependent variables the feature vectors of the addressed output channels may be decomposed according to a tensor product of at least two vector subspaces, each vector subspace being of smaller dimension than the (composed) feature space. A first projection of the feature vectors onto a first vector subspace yields then the feature vectors of the output channel which are used as inputs to the classifier of the neural network as described before. A second projection of the feature vectors onto a second vector subspace yields an independent regression vector comprising at least one component, which is used as input to the regression task, e.g. weights for each regression vector component may be directly determined, e.g. by virtue of the Moore-Penrose inverse. Alternatively, the class-specific independent regression vectors may be fed through one or more intermediate layers, e.g. dense (FC) layers, of an additionally provided regression network. In consequence, optimal regression weights are determined from the output layer of such a regression network. The combined classification-regression has been conducted for a synthetic data set comprising 60k training image data samples and 10k test image data samples (both 56*56 pixel images) of randomized line segments, wherein randomization affects the slope angle, the line segment length and width, and the centre coordinates. Moreover, image noise was added, e.g. for creating defects and/or missing parts in the line segments. Providing a mean-square loss for the slope angle in the regression part (without an additional regression network and using a six dimensional vector subspace for projecting feature vectors onto the regression vectors), a test prediction accuracy of 1.9° is obtained. Although the same dependent variable, e.g. the slope angle, is used for all four classes in the present embodiment, other embodiments of the present invention may be faced with class-dependent variables, e.g. a line segment class predicting slope angles and a circle class predicting centre coordinates and/or radii, both dependent variables being predicted by a classification-regression approach for which a single neural network may be trained according to an embodiment of the present invention.

Embodiments of the present invention may implemented on a multi-core processor such that computations may be parallelized as much as possible, e.g. parallel convolution computation for the independent filter groups, parallel processing of several image data samples and/or their input channels, etc. GPU arrays with local memory may be used with dedicated software for speeding up the repeated forward and backward passes while training the neural network and decoder network and for decreasing memory access latency. Furthermore, it is possible to exploit parallel computing in distributed computer networks or clusters, which further reduces training time, e.g. by implementing embodiments of the present invention in accordance with a suitable communication protocol, e.g. MPI. Alternatively, embodiments of the present invention may be executed on specifically designed accelerator chips to further reduce memory access latencies and power consumption.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. A computer-implemented method for training a neural network for classifying image data, the method comprising:

   - providing a labelled input data set comprising a plurality of labelled image data samples (101), the labels corresponding to a set of image data classes;
   - providing a neural network (100) comprising an input layer, at least one intermediate layer (102, 103), and an output layer (105, 108) comprising one channel per class, each channel providing a multidimensional feature vector under a mapping of each of the plurality of labelled image data samples applied at the input layer of the neural network;
   - providing a layered decoder network (120) for reconstructing image data samples at its output, and connecting the output layer of the neural network to an input layer (121) of the decoder network;
   - providing a classifier (109) for predicting class labels, predicted class labels being selected as the label of the class associated with the channel for which a normed distance of its feature vector relative to a pre-determined reference point (203) is smallest;
   - providing a loss function for the neural network and a loss function for the decoder network and combining them into a cost function, the loss function for the decoder network being suitable for reducing a deviation between reconstructed image data samples and corresponding image data samples applied at the input layer of the neural network, and the loss function for the neural network being suitable for steering, for each channel, the feature vectors corresponding to image data samples of the class associated with this channel, into a convex target region (206) around the pre-determined reference point, whereas the feature vectors corresponding to image data samples of at least one of the other classes not associated with this channel, are steered away from the convex target region; and
   - training network parameters of the neural network and the decoder network with a training algorithm using the cost function and at least a subset of the labelled input data set as inputs.

2. A method according to any of the previous claims, wherein providing a neural network comprises providing a convolutional neural network and/or wherein the output layer comprises sigmoid-activated neurons.

3. A method according to any of the previous claims, wherein providing a neural network further comprises providing a neural network with a batch normalization layer (107) inserted in between the output layer and a last one of the at least one intermediate layer.

4. A method according to any of the previous claims, wherein the loss function of the neural network is implemented as a piecewise linear loss (301, 302).

5. A method according to any of the previous claims, further comprising synthesizing at least one new labelled image data sample by selecting a point in the convex target region of the feature space associated with any of the classes and applying the selected point to the input layer of the decoder network for reconstructing at its output the synthesized new labelled image data sample.

6. A method according to claim 5, wherein a first selected point corresponding to a perturbed value and a second selected point corresponding to an unperturbed value of the feature vector of a channel onto which an existing image data sample, addressing said channel, is mapped, generate a first and a second reconstructed labelled image data sample, and wherein synthesizing at least one new labelled image data sample further comprises the step of combining a deviation between first and a second reconstructed labelled image data sample with said existing image data sample.

7. A method according to claim 5 or 6, further comprising repeating the steps of any of the previous claims, wherein a plurality of synthesized new labelled image data samples are added to or substituting the labelled input data set.

8. A method according to any of the previous claims, further comprising the step of momentarily modifying the label of each labelled image data sample such that at least one channel, corresponding to any of the other classes not addressed by the label, is not contributing to the loss function of the neural network.

9. A method according to claim 8, wherein the at least one channel not contributing to the loss function of the neural network is selected as the channel for which a normed distance of its feature vector relative to the pre-determined reference point is smallest.

10. A method according to claim 9, further comprising the steps of providing at least one alternative class label, different from the predicted class label, as the at least one label with which the selected at least one channel not contributing to the loss function of the neural network is associated, and of detecting a relation between the feature vectors of the at least one alternative class label and the predicted class label.

11. A method according to claim 10, wherein detecting a relation between the feature vectors of the at least one alternative class label and the predicted class label includes verifying whether the feature vectors of the at least one alternative class label and the predicted class label are all located inside the convex target region.

12. A computer-implemented method for classifying image data, the method comprising:

providing a neural network trained in accordance with any of the previous claims; and
applying unlabelled image data samples at the input layer of the trained neural network and obtaining a predicted class label from the classifier.

13. A computer program product comprising instructions which, when the program is executed by a computer, perform the steps of a method according to any of the previous claims.

14. A computer-readable data carrier comprising instructions which, when executed on a computer, cause the computer to perform the steps of a method according to any of claims 1 to 12.

15. A data processing device comprising means for carrying out the steps of a method according to any of claims 1 to 12.

**FIG. 1**

**FIG. 2**

**FIG. 3**

**FIG. 4**

**FIG. 5A**

FIG. 5B

FIG. 5C

**FIG. 5D**

FIG. 6

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIDDIQUA AYESHA ET AL: "Supervised Deep-Autoencoder for Depth Image-Based 3D Model Retrieval", 2018 IEEE WINTER CONFERENCE ON APPLICATIONS OF COMPUTER VISION (WACV), IEEE, 12 March 2018 (2018-03-12), pages 939-946, XP033337713, DOI: 10.1109/WACV.2018.00108 [retrieved on 2018-05-03] * abstract * * items 3.1 and 3.2 * | 1-15 | INV. G06K9/46 G06K9/62 |
| A | SCHONBERGER JOHANNES L ET AL: "Comparative Evaluation of Hand-Crafted and Learned Local Features", IEEE COMPUTER SOCIETY CONFERENCE ON COMPUTER VISION AND PATTERN RECOGNITION. PROCEEDINGS, IEEE COMPUTER SOCIETY, US, 21 July 2017 (2017-07-21), pages 6959-6968, XP033250062, ISSN: 1063-6919, DOI: 10.1109/CVPR.2017.736 [retrieved on 2017-11-06] * item 2.1 * | 1-15 | |
| A | MEI WANG ET AL: "Deep Face Recognition: A Survey", ARXIV.ORG, CORNELL UNIVERSITY LIBRARY, 201 OLIN LIBRARY CORNELL UNIVERSITY ITHACA, NY 14853, 18 April 2018 (2018-04-18), XP080872017, * item III.D.1; page 8 * | 1-15 | |

TECHNICAL FIELDS
SEARCHED (IPC)

G06K
G06N

-/--

The present search report has been drawn up for all claims

| Place of search | Date of completion of the search | Examiner |
|---|---|---|
| The Hague | 30 November 2018 | Philips, Petra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

**EUROPEAN SEARCH REPORT**

Application Number

EP 18 17 8146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SERGEY IOFFE ET AL: "Batch Normalization: Accelerating Deep Network Training by Reducing Internal Covariate Shift", PROCEEDINGS OF MACHINE LEARNING RESEARCH (PMLR), PROCEEDINGS OF THE INTERNATIONAL CONFERENCE ON MACHINE LEARNING (ICML 2015), vol. 37, 7 July 2015 (2015-07-07), pages 448-456, XP055490336, * abstract * * section 1 * | 3 | |
| A | Anonymous: "Batch Normalization", , 9 February 2017 (2017-02-09), XP055528849, Internet Retrieved from the Internet: URL:https://wiki.tum.de/display/lfdv/Batch +Normalization [retrieved on 2018-11-30] * page 1 - page 2 * | 3 | |
| A | SIMARD P Y ET AL: "Best practices for convolutional neural networks applied to visual document analysis", DOCUMENT ANALYSIS AND RECOGNITION, 2003. PROCEEDINGS. SEVENTH INTERNAT IONAL CONFERENCE ON AUG. 3-6, 2003, PISCATAWAY, NJ, USA,IEEE, 3 August 2003 (2003-08-03), pages 958-963, XP010656898, DOI: 10.1109/ICDAR.2003.1227801 ISBN: 978-0-7695-1960-9 * abstract * * items 1 and 2 * | 5-7 | TECHNICAL FIELDS SEARCHED (IPC) |
| A | WO 2017/073373 A1 (MORPHO INC [JP]) 4 May 2017 (2017-05-04) * paragraphs [0009] - [0011] * | 8-11 | |

-/--

The present search report has been drawn up for all claims

| Place of search | Date of completion of the search | Examiner |
|---|---|---|
| The Hague | 30 November 2018 | Philips, Petra |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 18 17 8146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | & EP 3 361 423 A1 (MORPHO INC [JP]) 15 August 2018 (2018-08-15) ----- | | |

TECHNICAL FIELDS
SEARCHED     (IPC)

The present search report has been drawn up for all claims

| Place of search | Date of completion of the search | Examiner |
|---|---|---|
| The Hague | 30 November 2018 | Philips, Petra |

EPO FORM 1503 03.82 (P04C01)

**ANNEX TO THE EUROPEAN SEARCH REPORT
ON EUROPEAN PATENT APPLICATION NO.**

EP 18 17 8146

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2018

| Patent document cited in search report | Publication date | Patent family member(s) | Publication date |
|---|---|---|---|
| WO 2017073373 A1 | 04-05-2017 | CN 108351986 A | 31-07-2018 |
| | | EP 3361423 A1 | 15-08-2018 |
| | | JP 6271085 B2 | 31-01-2018 |
| | | JP 2018018537 A | 01-02-2018 |
| | | JP WO2017073373 A1 | 26-10-2017 |
| | | KR 20180079391 A | 10-07-2018 |
| | | US 2018307946 A1 | 25-10-2018 |
| | | WO 2017073373 A1 | 04-05-2017 |

EPO FORM P0459

For more details about this annex : see Official Journal of the European Patent Office, No. 12/82